# EUROPEAN PATENT APPLICATION

(11) **EP 3 182 232 A1**
(43) Date of publication of application: **21.06.2017**
(21) Application number: 15199716.0
(22) Date of filing: 14.12.2015
(51) Int. Cl.: G05B 19/02, H04L 29/08

(54) **SIGNALLING OF SPECIFICATION INFORMATION ON AN INDUSTRIAL DEVICE**

(71) Applicant: ABB Technology Oy, 00380 Helsinki (FI)
(72) Inventor: Kohvakka, Mikko, 00380 Helsinki (FI); Tanila, Teemu, 00380 Helsinki (FI); Hu, Zhongliang, 00380 Helsinki (FI)
(74) Representative: Kolster Oy Ab

(57) **Abstract**

A method comprises a network apparatus (105, 109) requesting (202, 203) and receiving (205, 206), from an industrial automation device (101) via a communications network, identification information on the industrial automation device (101) regarding at least one characteristic of the industrial automation device (101). Based on the receiving, an interaction specification is retrieved (207) regarding the industrial automation device (101) from a database, the interaction specification indicating at least one protocol for interaction between the network apparatus (105, 109) and the industrial automation device (101). The at least one protocol is utilized (208, 209, 211, 212) for interacting between the network apparatus (105, 109) and the industrial automation device (101) via the communications network, to read and write (210) information supported by at least one of the industrial automation device (101) and a memory device connected to it.

## Description

### TECHNICAL FIELD

The invention relates to communications, and particularly to communications between an industrial automation device and a terminal device of a communications system.

### BACKGROUND

The following background description art may include insights, discoveries, understandings or disclosures, or associations together with disclosures not known to the relevant art prior to the present invention but provided by the present disclosure. Some such contributions disclosed herein may be specifically pointed out below, whereas other such contributions encompassed by the present disclosure the invention will be apparent from their context.

Frequency converters are used to change the frequency and magnitude of electricity supplied to a load. Frequency converters are being used for example in alternating current (AC) motor drives. In exemplary operation, a frequency converter receives AC current from an electrical power supply and converts the frequency of the received AC current to another frequency, after which the AC current is supplied to an AC electric motor. Also further parameters, for example, a voltage level of the received AC current may be changed. The AC motors are used in various applications including, for example, fans and pumps. In many applications, the use of frequency converters may provide significant energy savings compared to supplying electrical power having a constant frequency.

A standardized network interface and standardized protocols are a requirement to remote access to industrial automation devices such as frequency converters, PRCs, switches, controllable automation devices etc. In addition, knowledge on the capabilities and specifications on how to interact with the industrial device are required before the remote access is possible. This set of required information may be referred to as an interaction specification. The interaction specification may be quite large and complex depending on the industrial automation device. The interaction specification is typically different for different versions and models of industrial automation devices.

### BRIEF DESCRIPTION

The following presents a simplified summary of features disclosed herein to provide a basic understanding of some exemplary aspects of the invention. This summary is not an extensive overview of the invention. It is not intended to identify key/critical elements of the invention or to delineate the scope of the invention. Its sole purpose is to present some concepts disclosed herein in a simplified form as a prelude to a more detailed description.

According to an aspect, there is provided the subject matter of the independent claims. Embodiments are defined in the dependent claims.

One or more examples of implementations are set forth in more detail in the accompanying drawings and the description below. Other features will be apparent from the description and drawings, and from the claims.

Some embodiments provide a method, system, apparatus and a computer program product for signalling of specification information between an industrial automation device and a terminal device of a communications system.

### BRIEF DESCRIPTION OF DRAWINGS

In the following the invention will be described in greater detail by means of preferred embodiments with reference to the attached drawings, in which
Figure 1 illustrates a wireless communication system to which embodiments of the invention may be applied;
Figures 2, 3, 4 and 5 are signalling diagrams of a procedure for signalling of specification information on an industrial device according to embodiments of the invention;
Figure 6 illustrates a blocks diagram of an apparatus according to an embodiment of the invention.

### DETAILED DESCRIPTION OF THE INVENTION

The following embodiments are exemplary. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned.

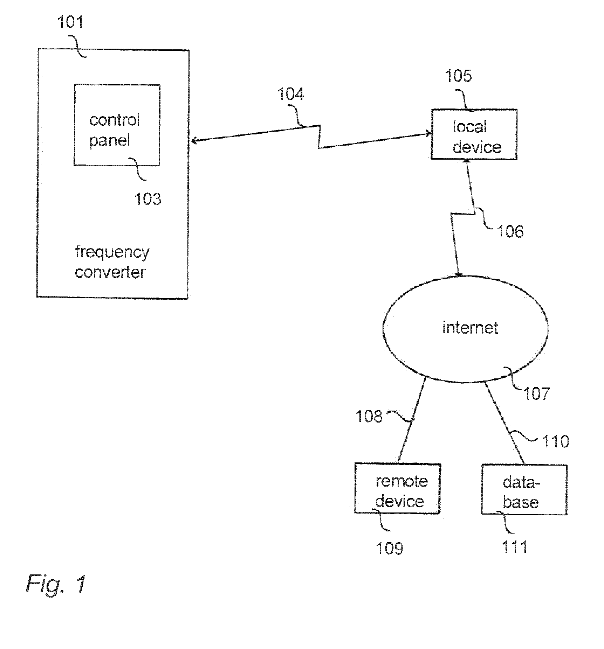

Figure 1 illustrates a wireless communication scenario to which embodiments of the invention may be applied. Referring to Figure 1, an example of a radio system to which embodiments of the invention may be applied, is based on LTE network elements. However, an embodiment is not limited to the LTE radio communications systems but may also be implemented in other radio communications systems, such as 3G, 4G, 5G, LTE-A, UMTS (universal mobile telecommunications system), EDGE, WCDMA, Bluetooth network, WiFi, WLAN or any other mobile or wireless network. In an embodiment, the presented solution may be applied between user equipment belonging to different but compatible systems such as LTE and UMTS.

A general architecture of a communication system is illustrated in Figure 1. Figure 1 illustrates a simplified system architecture only showing some elements and functional entities, all being logical units whose implementation may differ from what is shown. The connections shown in Figure 1 are logical connections; the actual physical connections may be different. It is apparent to a person skilled in the art that the systems also comprise other functions and structures. It should be appreciated that the functions, structures, elements, and protocols used in or for wireless communication are irrelevant to the actual invention. Therefore, they need not be discussed in more detail here.

Figure 1 illustrates a communication system according to an embodiment. Figure 1 illustrates an exemplary communications system in which a user terminal 105 is able to connect to the internet 107 and to one or more industrial devices such as a frequency converter 101. The user terminal 105 may be a local terminal device (local device) located on-site at a close proximity of the frequency converter 101. The local terminal device 105 may comprise a user equipment such as a smartphone, mobile phone, tablet computer or laptop computer. A connection 106 of the local terminal device 105 to the internet 107 may be provided by a cellular, wireless or wired link. A connection 104 of the local terminal device 105 to the frequency converter 101 may be provided e.g. by a Bluetooth, Bluetooth low energy, WiFi, wireless mesh network, NFC (near field communication), and/or inductive connection (such as an inductive connection according to an inductive power standard (Qi) by the Wireless Power Consortium).

A network apparatus 109 may be a remote device such as a remote terminal device, server and/or database located at a service center, for facilitating service and maintenance of the frequency converter 101. The remote device 109 may facilitate different ways of how to communicate with the frequency converter 101 via the local terminal device 105. The remote device 109 may comprise e.g. a desktop computer, laptop computer, tablet computer, smartphone, mobile phone, server, database, etc. Any suitable technology that makes it possible to store frequency converter history data and other frequency converter specific data into a service center database 111 may be utilized. For example, a cloud service (cloud computing) may be used via the internet 107 to store frequency converter history data and other frequency converter data into the service center database 111. The local and remote devices may be capable of communicating with each other via the internet 107 by utilizing the cloud service.

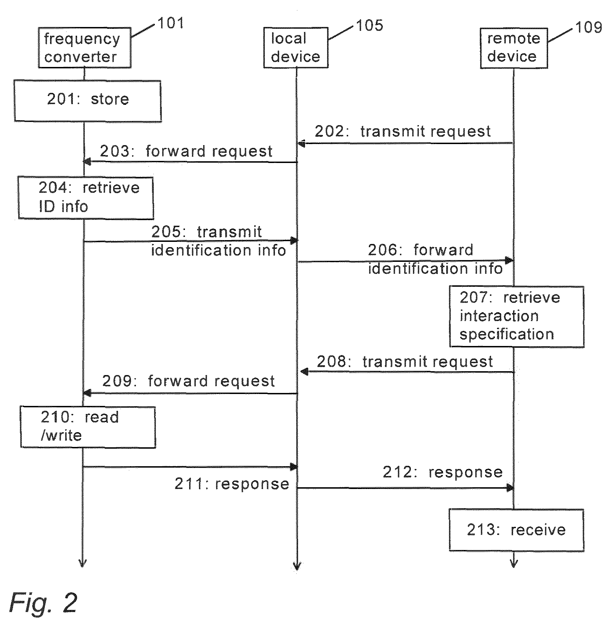

Let us now describe embodiments of the invention with reference to Figures 2, 3, 4 and 5. Figures 2, 3, 4 and 5 are signalling diagrams illustrating methods for signalling specification information on an industrial automation device between the industrial automation device (such as the frequency converter 101), and network nodes (or network apparatuses) of a communication system, such as the local device 105 and/or the remote device 109. The network node may be a terminal device, user equipment, host computer, server computer, base station, access node or any other network element. For example, the server computer or the host computer may generate a virtual network through which the host computer communicates with the terminal device.

Referring to Figure 2, the frequency converter 101 is configured to store (item 201), e.g. in an internal memory of the frequency converter 101, information regarding the frequency converter, such as parameters, sensor values, actual values, waveforms, faults, warnings, log files, firmware. The remote device 109 is configured transmit (item 202) an ID request message via the local device 105 to the frequency converter 101 to obtain identification information (i.e. a small amount of data specifying e.g. the brand, model and version of the frequency converter 101) on the frequency converter 101. The ID request message 202 may be transmitted in response to an action by the user of the remote device 109, or automatically in response to the start-up of the user interface application in the remote device 109 or in response to establishing a connection (not shown in Figure 2) between the frequency converter 101 and the remote device 109 via the local device 105. The local device 105 is configured to receive and forward (item 203) the ID request message to the frequency converter 101. The frequency converter 101 is configured to receive (item 204) the ID request message transmitted from the remote device 109 via the local device 105. In response to the receiving 204, the frequency converter 101 is configured to retrieve (204), from the internal memory of the frequency converter 101, the requested identification information on the frequency converter 101. In item 205, the frequency converter 101 is configured to transmit the retrieved identification information on the frequency converter 101 to the remote device 109 via the local device 105. The local device 105 is configured to receive and forward (item 206) the identification information to the remote device 109.

In item 207, the remote device 109 is configured to receive the identification information 206 on the frequency converter 101. Further, in item 207, the remote device 109 is configured to use the received identification information to retrieve 207 the corresponding interaction specification from a database or memory. The interaction specification indicates at least one protocol for interacting with the frequency converter 101. The interaction specification may further indicate at least one capability of the frequency converter 101 (alternatively, information on the at least one capability of the frequency converter may be retrieved in a later step if needed, or the at least one capability of the frequency converter may be deduced from the interaction specification). After the interaction specification is retrieved from the database or memory, the remote device 109 is able to interact with the frequency converter 101 by utilizing the at least one protocol, and access the internal configuration settings of the frequency converter 101 by read and write requests, for example, by using an application programming interface (API). This means that the remote device 109 may request reading, changing or updating the information stored 201 by the frequency converter 101, by transmitting a corresponding read/write request 208, 209 via the local device 105 to the frequency converter 101. Upon receiving (item 210) the read/write request 209, the frequency converter 101 reads, changes or updates 210 the information accordingly, and may transmit a response 211, 212 including the read/changed/updated information, via the local device 105 to the remote device 109. The remote device 109 receives the response in item 213, wherein this read/changed/updated information may be used 213 in the remote device 109, for example, to define the status of the frequency converter 101 or solve problems regarding the frequency converter 101.

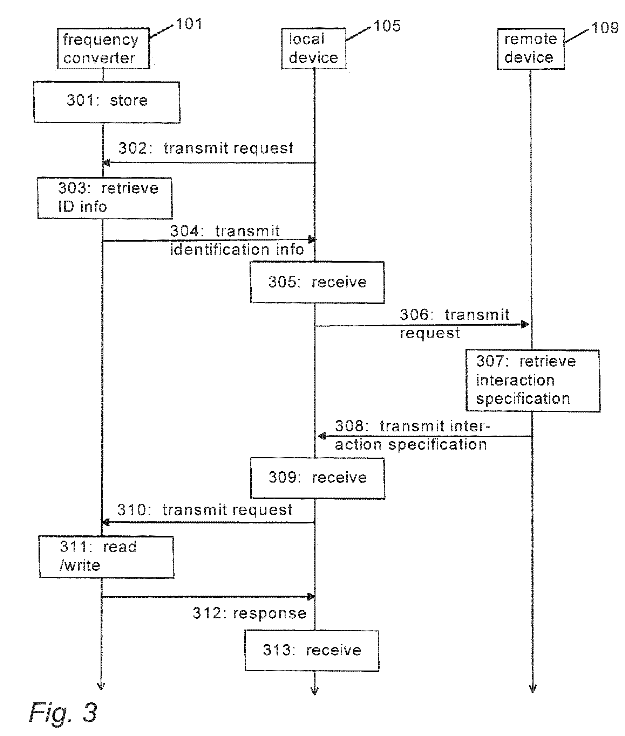

Referring to Figure 3, the frequency converter 101 is configured to store (item 301), e.g. in an internal memory of the frequency converter 101, information regarding the frequency converter 101, such as parameters, sensor values, actual values, waveforms, faults, warnings, log files, firmware. The local device 105 is configured transmit (item 302) an ID request message to the frequency converter 101 to obtain identification information (i.e. a small amount of data specifying e.g. the brand, model and version of the frequency converter 101) on the frequency converter 101. The ID request message 302 may be transmitted in response to an action by the user of the local device 105, or automatically in response to the start-up of the user interface application in the local device 105 or in response to establishing a connection (not shown in Figure 3) between the frequency converter 101 and the local device 105. The frequency converter 101 is configured to receive (item 303) the ID request message transmitted from the local device 105. In response to the receiving 303, the frequency converter 101 is configured to retrieve (303), from the internal memory of the frequency converter 101, the requested identification information on the frequency converter 101. In item 304, the frequency converter 101 is configured to transmit the retrieved identification information on the frequency converter 101 to the local device 105. The local device 105 is configured to receive (item 305) the identification information, and based on the received identification information, transmit an IS request (including the identification information on the frequency converter 101) to the remote device 109, to obtain the interaction specification of the frequency converter 101. The interaction specification indicates at least one protocol for interacting with the frequency converter 101. The interaction specification may further indicate at least one capability of the frequency converter 101 (alternatively, information on the at least one capability of the frequency converter may be retrieved in a later step if needed, or the at least one capability of the frequency converter may be deduced from the interaction specification).

In item 307, the remote device 109 is configured to receive the IS request (including the identification information on the frequency converter 101) from the local device 105. Further, in item 307, the remote device 109 is configured to use the identification information to retrieve 307 the corresponding interaction specification from a database or memory. In item 308, the remote device 109 is configured to transmit the retrieved interaction specification to the local device 105. After the interaction specification is received (item 309) in the local device 105, the local device 105 is able to interact with the frequency converter 101 by utilizing the at least one protocol, and access the internal configuration settings of the frequency converter 101 by read and write requests, for example, by using an application programming interface (API). This means that the local device 105 may request reading, changing or updating the information stored 301 by the frequency converter 101, by transmitting a corresponding read/write request 310 to the frequency converter 101. Upon receiving (item 311) the read/write request 310, the frequency converter 101 is configured to read, change or update 311 the information accordingly, and may transmit a response 312 including the read/changed/updated information, to the local device 105. The local device 105 receives the response in item 313, wherein the read/changed/updated information may be used 313 in the local device 105, for example, to define the status of the frequency converter 101 or solve problems regarding the frequency converter 101.

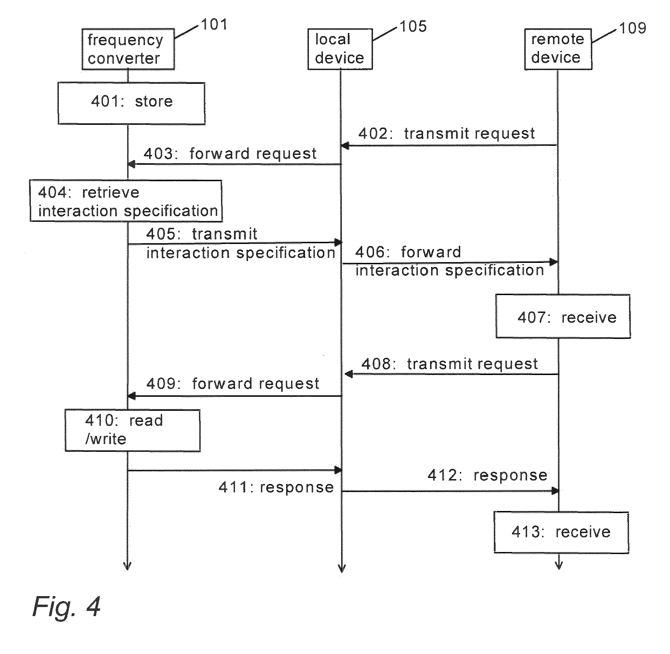

Referring to Figure 4, the frequency converter 101 is configured to store (item 401), e.g. in an internal memory of the frequency converter 101, information regarding the frequency converter 101, such as parameters, sensor values, actual values, waveforms, faults, warnings, log files, firmware. The remote device 109 is configured transmit (item 402) an IS request message via the local device 105 to the frequency converter 101 to obtain the interaction specification of the frequency converter 101. The interaction specification indicates at least one protocol for interacting with the frequency converter 101. The interaction specification may further indicate at least one capability of the frequency converter 101 (alternatively, information on the at least one capability of the frequency converter may be retrieved in a later step if needed, or the at least one capability of the frequency converter may be deduced from the interaction specification). The IS request message 402 may be transmitted in response to an action by the user of the remote device 109, or automatically in response to the start-up of the user interface application in the remote device 109 or in response to establishing a connection (not shown in Figure 4) between the frequency converter 101 and the remote device 109 via the local device 105. The local device 105 is configured to receive and forward (item 403) the IS request message to the frequency converter 101. The frequency converter 101 is configured to receive (item 404) the IS request message transmitted from the remote device 109 via the local device 105. In response to the receiving 404, the frequency converter 101 is configured to retrieve (404), from the internal memory of the frequency converter 101, the interaction specification of the frequency converter 101. In item 405, the frequency converter 101 is configured to transmit the retrieved interaction specification of the frequency converter 101 to the remote device 109 via the local device 105. The local device 105 is configured to receive and forward (item 406) the interaction specification to the remote device 109.

In item 407, the remote device 109 is configured to receive the interaction specification 406 of the frequency converter 101. After the interaction specification is received 407 in the remote device 109, the remote device 109 is able to interact with the frequency converter 101 by utilizing the at least one protocol, and access the internal configuration settings of the frequency converter 101 by read and write requests, for example, by using an application programming interface (API). This means that the remote device 109 may request reading, changing or updating the information stored 401 by the frequency converter 101, by transmitting a corresponding read/write request 408, 409 via the local device 105 to the frequency converter 101. Upon receiving (item 410) the read/write request 409, the frequency converter 101 is configured to read, change or update 410 the information accordingly, and may transmit a response 411, 412 including the read/changed/updated information, via the local device 105 to the remote device 109. The remote device 109 receives the response in item 413, wherein the read/changed/updated information may be used 413 in the remote device 109, for example, to define the status of the frequency converter 101 or solve problems regarding the frequency converter 101.

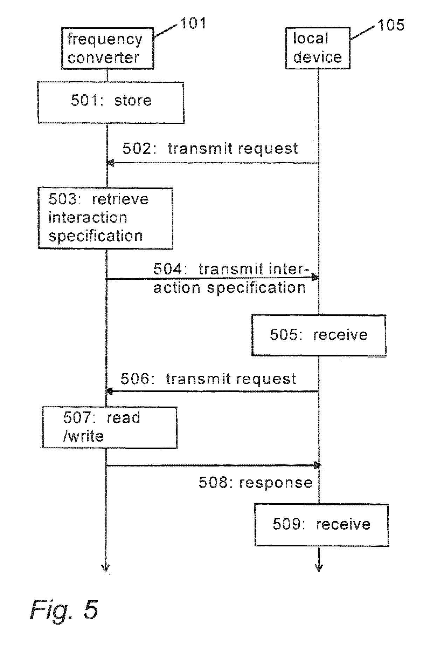

Referring to Figure 5, the frequency converter 101 is configured to store (item 501), e.g. in an internal memory of the frequency converter 101, information regarding the frequency converter 101, such as parameters, sensor values, actual values, waveforms, faults, warnings, log files, firmware. The local device 105 is configured transmit (item 502) an IS request message to the frequency converter 101 to obtain the interaction specification of the frequency converter 101. The interaction specification indicates at least one protocol for interacting with the frequency converter 101. The interaction specification may further indicate at least one capability of the frequency converter 101 (alternatively, information on the at least one capability of the frequency converter may be retrieved in a later step if needed, or the at least one capability of the frequency converter may be deduced from the interaction specification). The IS request message 502 may be transmitted in response to an action by the user of the local device 105, or automatically in response to the start-up of the user interface application in the local device 105 or in response to establishing a connection (not shown in Figure 5) between the frequency converter 101 and the local device 105. The frequency converter 101 is configured to receive (item 503) the IS request message transmitted from the local device 105. In response to the receiving 503, the frequency converter 101 is configured to retrieve (503), from the internal memory of the frequency converter 101, the interaction specification of the frequency converter 101. In item 504, the frequency converter 101 is configured to transmit the retrieved interaction specification of the frequency converter 101 to the local device 105. The local device 105 is configured to receive (item 505) the interaction specification of the frequency converter 101. After the interaction specification is received 505 in the local device 105, the local device 105 is able to interact with the frequency converter 101 by utilizing the at least one protocol, and access the internal configuration settings of the frequency converter 101 by read and write requests, for example, by using an application programming interface (API). This means that the local device 105 may request reading, changing or updating the information stored 501 by the frequency converter 101, by transmitting a corresponding read/write request 506 to the frequency converter 101. Upon receiving (item 507) the read/write request 506, the frequency converter 101 is configured to read, change or update 507 the information accordingly, and may transmit a response 508 including the read/changed/updated information, to the local device 105. The local device 105 receives the response in item 509, wherein the read/changed/updated information may be used 509 in the local device 105, for example, to define the status of the frequency converter 101 or solve problems regarding the frequency converter 101.

In maintenance and service operations of frequency converters and other industrial devices, it is helpful if the industrial device may be accessed and the industrial device status and possible faults are readable from a remote location before the maintenance personnel is to go to the actual site to perform maintenance operations. The industrial device may be accessed from the remote location, for example, by using an internet connection directly to the industrial device or by using a local router device between the industrial device and the internet. The remote device uses a remote user interface (UI) which may be a mobile device (phone, tablet etc.), PC or other internet-connected device. The connection between the industrial device and the remote UI may comprise a wireless or wired network connection or a series of different network connections where messages are routed.

To enable compatibility with various industrial device types, brands and versions, the remote user interface is to interwork with the supported functions, capabilities and services of the industrial device as well as the supported protocols and application programming interfaces (API) and their versions of the industrial device.

An exemplary system comprises a drive unit 101 which is equipped with a short range radio interface, e.g. Bluetooth or WiFi. The radio interface may be in the drive unit 101 or in a control panel 103 of the drive unit 101. The mobile device 105 may operate as a mobile router that routes data between the short range wireless radio network 104 and the internet-connected IP based network 107, for example, 3G, 4G, WiFi. The remote user device 109 is connected to the internet 107 by using Ethernet, WiFi or other network interface.

The remote connection may be mutually agreed between the local device user and the remote device user, for example, by a phone call, chat messages or similar. Then, a connection is initiated by the remote user by sending a connection request from the remote device. The local device user receives the connection request and approves the connection. After the remote connection is established, the remote user is able to communicate with the drive and access the internal configuration settings by means of read and write requests, for example, by using an application programming interface (API). These requests are routed through the network on top of the wired or wireless network used, e.g. Bluetooth, WiFi, 3G, 4G and/or Ethernet. The industrial device may store log files in its internal memory about fault situations, for example. The remote user may read these logs by sending a log read request from the remote device to the industrial device via the local device. Upon receiving the read request, the industrial device transmits the log file via the local device to the remote device. These log files may be used in the remote device to define the status of the industrial device or solve problem situations occurring in the industrial device.

In an embodiment, a smart user interface is comprised in a mobile phone, tablet, PC or other device connected to the industrial device by a wireless or wired network connection. The smart UI may be used to present the status or other information or control the industrial device. In addition, the smart user interface may download content from the internet and combine these two information sources in the user interface to increase the user experience and add functionalities. Examples of such functionalities include reading parameters, reading sensor values, reading actual values, reading waveforms, reading faults, reading warnings, reading log files, changing parameters, updating firmware.

In an embodiment, a small amount of data specifying the brand, model and version of the device, is stored in the industrial device. The user interface application reads this data from the industrial device. This data is then used to search and read the appropriate interaction specification from a remote database. Thus, the interaction specification may be discovered by reading the interaction specification from the remote database based on the identification information on the industrial device. The remote database may be connected to in the remote device via the internet or built in the remote device.

In another embodiment, the interaction specification of the industrial device is available in the memory of the industrial device or in a memory device connected to the industrial device. The user interface application in the mobile device may read the interaction specification from the industrial device by using a standardized read operation by means of a standardized API and protocol. Thus, the interaction specification may be stored in the industrial device and discovered by reading the interaction specification to the user interface application on demand.

Both of these methods use a standardized protocol and API to read the identification information or the complete interaction specification. In both cases, the interaction specification may be read on demand, for example, during the initialization of the user interface application or after the establishment of the remote connection. The interaction specification is then used to configure the user interface application of the remote device and/or the user interface application of the local device to be able to interact correctly with the industrial device.

In addition to a drive system/frequency converter, the embodiment are also applicable to other automated power conversion devices such as AC/DC modules, DC/AC modules, DC/DC modules, programmable logic controllers (PLC), switches, motion controllers, motion drives, servo motors, soft starters, robotics, cars, heavy equipment, and/or any other devices used for industrial automation.

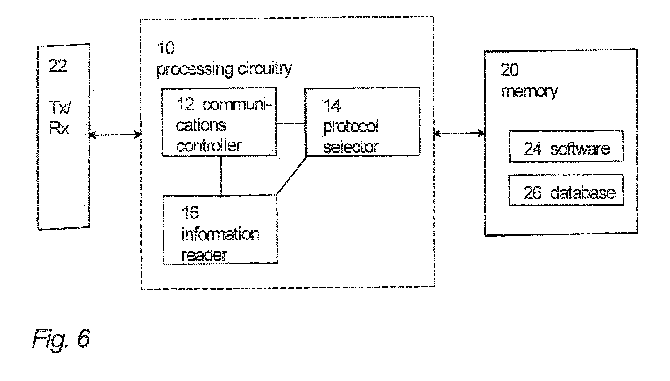

An embodiment provides an apparatus comprising at least one processor and at least one memory including a computer program code, wherein the at least one memory and the computer program code are configured, with the at least one processor, to cause the apparatus to carry out the procedures of the above-described industrial automation device or terminal device. Figure 6 illustrates a block diagram of a structure of such a device. The at least one processor, the at least one memory, and the computer program code may thus be considered as an embodiment of means for executing the above-described procedures of the industrial automation device or terminal device. The apparatus may be comprised in the industrial automation device or terminal device, e.g. the apparatus may form a chipset or a circuitry in the industrial automation device or terminal device. In some embodiments, the apparatus is the industrial automation device or terminal device. The apparatus comprises a processing circuitry 10 comprising the at least one processor. The processing circuitry 10 may comprise a communications controller 12 configured to request/receive/transmit via a communications network, an interaction specification regarding the industrial automation device, the interaction specification indicating at least one protocol for interaction between the network apparatus and the industrial automation device. The processing circuitry 10 may further comprise a protocol selector 14 configured to utilize the at least one protocol for interacting between the terminal device and the industrial automation device via the communications network, and an information reader 16 configured to read/write information supported by the industrial automation device and/or a memory device connected to the industrial automation device.

The processing circuitry 10 may comprise the circuitries as subcircuitries, or they may be considered as computer program modules executed by the same physical processing circuitry. The memory 20 may store one or more computer program products (software 24) comprising program instructions that specify the operation of the circuitries. The memory may further store a database 26 comprising frequency controller interaction specification data, for example. The apparatus may further comprise an interface 22 (transmitter/receiver) providing the apparatus with communication capability with network nodes/devices.

As used herein, the term 'circuitry' refers to all of the following: (a) hardware-only circuit implementations such as implementations in only analog and/or digital circuitry; (b) combinations of circuits and software and/or firmware, such as (as applicable): (i) a combination of processor(s) or processor cores; or (ii) portions of processor(s)/software including digital signal processor(s), software, and at least one memory that work together to cause an apparatus to perform specific functions; and (c) circuits, such as a microprocessor(s) or a portion of a microprocessor(s), that require software or firmware for operation, even if the software or firmware is not physically present.

This definition of 'circuitry' applies to all uses of this term in this application. As a further example, as used herein, the term "circuitry" would also cover an implementation of merely a processor (or multiple processors) or portion of a processor, e.g. one core of a multi-core processor, and its (or their) accompanying software and/or firmware. The term "circuitry" would also cover, for example and if applicable to the particular element, a baseband integrated circuit, an application-specific integrated circuit (ASIC), and/or a field-programmable grid array (FPGA) circuit for the apparatus according to an embodiment of the invention.

The processes or methods described above in connection with Figures 1 to 6 may also be carried out in the form of one or more computer process defined by one or more computer programs. The computer program shall be considered to encompass also a module of a computer programs, e.g. the above-described processes may be carried out as a program module of a larger algorithm or a computer process. The computer program(s) may be in source code form, object code form, or in some intermediate form, and it may be stored in a carrier, which may be any entity or device capable of carrying the program. Such carriers include transitory and/or non-transitory computer media, e.g. a record medium, computer memory, read-only memory, electrical carrier signal, telecommunications signal, and software distribution package. Depending on the processing power needed, the computer program may be executed in a single electronic digital processing unit or it may be distributed amongst a number of processing units.

The present invention is applicable to cellular or mobile communication systems defined above but also to other suitable communication systems. The protocols used, the specifications of cellular communication systems, their network elements, and terminal devices develop rapidly. Such development may require extra changes to the described embodiments. Therefore, all words and expressions should be interpreted broadly and they are intended to illustrate, not to restrict, the embodiment.

It will be obvious to a person skilled in the art that, as the technology advances, the inventive concept can be implemented in various ways. The invention and its embodiments are not limited to the examples described above but may vary within the scope of the claims.

## Claims

1. A method comprising performing in a network apparatus (105, 109) the steps of
requesting and receiving, from an industrial automation device (101) via a communications network, identification information on the industrial automation device regarding at least one characteristic of the industrial automation device;
based on the receiving, retrieving an interaction specification regarding the industrial automation device from a database, the interaction specification indicating at least one protocol for interaction between the network apparatus and the industrial automation device; and
utilizing the at least one protocol for interacting with the industrial automation device via the communications network, to read and write information supported by at least one of the industrial automation device and a memory device connected to it.

2. A method according to claim 1, wherein the network apparatus comprises a local terminal device (105) and the requesting and receiving are carried out by using a first communications link established between the local terminal device and the industrial automation device, wherein the interaction specification is retrieved from the database via a remote terminal device by using a second communications link established between the local terminal device and the remote terminal device.

3. A method comprising performing in a network apparatus (105, 109) the steps of
requesting and receiving, from an industrial automation device (101) via a communications network, an interaction specification regarding the industrial automation device, the interaction specification indicating at least one protocol for interaction between the network apparatus and the industrial automation device;
utilizing the at least one protocol for interacting with the industrial automation device via the communications network, to read and write information supported by at least one of the industrial automation device, and a memory device connected to the industrial automation device.

4. A method according to claim 1 or 3, wherein the network apparatus comprises a remote terminal device (109) and the requesting and receiving are carried out via a local terminal device by using a first communications link established between the local terminal device and the industrial automation device and a second communications link established between the local terminal device and the remote terminal device.

5. A method according to claim 3, wherein the network apparatus comprises a local terminal device (105) and the requesting and receiving are carried out by using a first communications link established between the local terminal device and the industrial automation device, wherein the interaction specification is retrieved from the industrial automation device or the memory device connected to the industrial automation device by utilizing the first communications link.

6. A method according to claims 2, 4 or 5, wherein the interaction specification is retrieved in response to establishing the first and/or second communications link.

7. A method according to claims 2, 4 or 5, wherein the interaction specification is retrieved in response to starting in the network apparatus a user interface application for interacting with the industrial automation device.

8. A method according to any of claims 1 to 7, wherein the method comprises storing the retrieved interaction specification in the network apparatus.

9. A method comprising performing in an industrial automation device (101) the steps of
in response to receiving an identification request in the industrial automation device from a network apparatus, transmitting, from the industrial automation device via a communications network to a network apparatus, identification information on the industrial automation device regarding at least one characteristic of the industrial automation device;
based on an interaction specification regarding the industrial automation device, receiving a read and write request in the industrial automation device from the network apparatus, wherein the interaction specification indicates at least one protocol for interaction between the network apparatus and the industrial automation device;
utilizing the at least one protocol for interacting with the network apparatus via the communications network, to read and write information supported by at least one of the industrial automation device and a memory device connected to it.

10. A method comprising performing in an industrial automation device (101) the steps of
in response to receiving a specification request in the industrial automation device from a network apparatus, transmitting, from the industrial automation device via a communications network to the network apparatus, an interaction specification regarding the industrial automation device, the interaction specification indicating at least one protocol for interaction between the network apparatus and the industrial automation device;
based on the interaction specification, receiving a read and write request in the industrial automation device from the network apparatus;
utilizing the at least one protocol for interacting via the communications network with the network apparatus, to read and write information supported by at least one of the industrial automation device and a memory device connected to it.

11. A method according to any of claims 1 to 10, wherein
the interaction specification further indicates at least one capability of the industrial automation device;
information on the at least one capability of the frequency converter is retrieved, if needed, from the network apparatus or the industrial automation device; or
the at least one capability of the industrial automation device is deduced from the interaction specification.

12. A method according to any of claims 1 to 11, wherein the information supported by at least one of the industrial automation device and the memory device connected to it, comprises information on parameters, sensor values, actual values, waveforms, faults, warnings, log files, and/or firmware, regarding the industrial automation device, wherein the at least one protocol is utilized between the industrial automation device and the network apparatus to read, change or update said information.

13. A method according to any of claims 1 to 12, wherein the industrial automation device comprises one or more of a frequency converter, drive system, AC/DC module, DC/AC module, DC/DC module, programmable logic controller, switch, motion controller, motion drive, servo motor, soft starter, robotic, car, and heavy equipment.

14. An apparatus comprising
at least one processor; and
at least one memory including a computer program code, wherein the at least one memory and the computer program code are configured, with the at least one processor, to cause the apparatus to
perform any of the method steps of claims 1 to 13.

15. A system comprising an industrial automation device (101) and a network apparatus (105, 109),
wherein the network apparatus (105, 109) is configured to
request and receive, from the industrial automation device (101) via a communications network, identification information on the industrial automation device regarding at least one characteristic of the industrial automation device;
based on the receiving, retrieve an interaction specification regarding the industrial automation device from a database, the interaction specification indicating at least one protocol for interaction between the network apparatus and the industrial automation device; and
utilize the at least one protocol for interacting with the industrial automation device via the communications network, to read and write information supported by at least one of the industrial automation device and a memory device connected to it;
wherein the industrial automation device (101) is configured to
in response to receiving an identification request from the network apparatus, transmit via the communications network to the network apparatus, the identification information on the industrial automation device regarding the at least one characteristic of the industrial automation device;
based on the interaction specification regarding the industrial automation device, receive a read and write request from the network apparatus; and
utilize the at least one protocol for interacting with the network apparatus via the communications network, to read and write information supported by at least one of the industrial automation device and the memory device connected to it.

16. A system comprising an industrial automation device (101) and a network apparatus (105, 109),
wherein the network apparatus (105, 109) is configured to
request and receive, from the industrial automation device (101) via a communications network, an interaction specification regarding the industrial automation device, the interaction specification indicating at least one protocol for interaction between the network apparatus and the industrial automation device; and
utilize the at least one protocol for interacting with the industrial automation device via the communications network, to read and write information supported by at least one of the industrial automation device, and a memory device connected to the industrial automation device;
wherein the industrial automation device (101) is configured to
in response to receiving a specification request from a network apparatus, transmit the interaction specification regarding the industrial automation device, to the network apparatus via the communications network;
based on the interaction specification, receive a read and write request from the network apparatus; and
utilize the at least one protocol for interacting via the communications network with the network apparatus, to read and write information supported by at least one of the industrial automation device and the memory device connected to it.

17. A computer program product embodied on a distribution medium readable by a computer and comprising program instructions which, when loaded into an apparatus, execute the method according to any preceding claim 1 to 13.

18. A computer program product embodied on a non-transitory distribution medium readable by a computer and comprising program instructions which, when loaded into the computer, execute a computer process comprising causing a network node to perform any of the method steps of claims 1 to 13.
